# EUROPÄISCHE PATENTSCHRIFT

(11) **EP 2 247 875 B1**
(45) Veröffentlichungstag und Bekanntmachung des Hinweises auf die Patenterteilung: **07.12.2016**
(21) Anmeldenummer: 09715433.0
(22) Anmeldetag: 20.02.2009
(51) Int. Cl.: F16H 63/48

(54) **SCHALTVORRICHTUNG**
SHIFTING DEVICE
DISPOSITIF DE COMMUTATION

(30) Priorität: 29.02.2008 DE 102008011898
(43) Veröffentlichungstag der Anmeldung: 10.11.2010
(73) Patentinhaber: Daimler AG, 70327 Stuttgart (DE)
(72) Erfinder: ENGEL, Boris, 75417 Mühlacker (DE); GANSLOSER, Joachim, 71706 Markgröningen (DE)
(74) Vertreter: JENSEN & SON
(86) Internationale Anmeldenummer: PCT/EP2009/001248
(87) Internationale Veröffentlichungsnummer: WO 2009/106271

(56) Entgegenhaltungen:
- EP-A- 0 878 366
- EP-A- 1 136 309
- EP-A- 1 216 871
- EP-A- 1 855 033
- WO-A-2006/115009
- DE-A1- 10 136 425
- DE-A1-102006 034 947
- JP-A- H06 174 085
- US-A- 5 823 282

## Beschreibung

Die Erfindung betrifft eine Parksperrschaltvorrichtung nach dem Oberbegriff des Anspruchs 1.

Aus der DE 198 34 156 A1 ist eine Parksperrschaltvorrichtung eines Kraftfahrzeugs mit einer hydraulischen Schalteinheit bekannt.

Aus der WO 2006/115009 A1 ist eine gattungsgemäße Parksperrschaltvorrichtung eines Kraftfahrzeugs mit wenigstens einer Schalteinheit bekannt, wobei die Schalteinheit auf eine Schaltkraft ausgelegt ist, die von einer von einer Brennkraftmaschine getrennt ausgebildeten Antriebseinheit erzeugbar ist.

Der Erfindung liegt insbesondere die Aufgabe zugrunde, eine Parksperrschaltvorrichtung bereitzustellen, die besonders flexibel einsetzbar ist und eine hohe Zuverlässigkeit aufweist. Sie wird gemäß der Erfindung durch die Merkmale des Anspruchs 1 gelöst. Weitere Ausgestaltungen ergeben sich aus den Unteransprüchen und Nebenansprüchen.

Die Erfindung geht aus von einer Parksperrschaltvorrichtung eines Kraftfahrzeugs mit wenigstens einer hydraulischen Schalteinheit.

Dabei ist die Schalteinheit auf einen Schaltdruck ausgelegt, der von einer Brennkraftmaschine getrennt ausgebildete Antriebseinheit erzeugbar ist. Dabei soll unter einer "Antriebseinheit" insbesondere eine Einheit verstanden werden, die dazu vorgesehen ist, eine Antriebsleistung zur Erzeugung eines für einen Schaltvorgang erforderlichen Schaltdrucks bereitzustellen. Unter "ausgelegt" soll verstanden werden, dass die Schalteinheit insbesondere von ihren hydraulischen Wirkflächen, einem vorgesehenen Energiespeicher, wie beispielsweise einer Schaltfeder, und/oder von einem Druckerzeugungsmittel, wie insbesondere von einer Pumpe, auf den Schaltdruck ausgelegt ist, der von der getrennt von der Brennkraftmaschine ausgebildeten Antriebseinheit erzeugbar ist, wobei eine maximale Leistung der von der Brennkraftmaschine ausgebildeten Antriebseinheit insbesondere kleiner ist als die der Brennkraftmaschine.

Damit kann insbesondere eine Unabhängigkeit von einer Brennkraftmaschine erreicht werden. Insbesondere kann ein Schaltvorgang, wie vorzugsweise einer Parksperrschaltvorrichtung, auch bei defekter bzw. nicht aktivierbarer Brennkraftmaschine sichergestellt werden, wodurch eine hohe Zuverlässigkeit sichergestellt werden kann.

Ist die Schalteinheit auf eine von einem Startergenerator gebildete Antriebseinheit ausgelegt, können zusätzlicher Bauraum, Gewicht und Kosten zumindest weitgehend vermieden werden. Dabei ist die Schalteinheit vorzugsweise derart ausgelegt, dass bereits bei einer Anlasserdrehzahl der Brennkraftmaschine ein erforderlicher Schaltdruck aufgebaut werden kann. Unter einem "Startergenerator" soll in diesem Zusammenhang insbesondere eine Antriebseinheit verstanden werden, die speziell zum Starten einer Brennkraftmaschine, d.h. insbesondere zum Durchdrehen einer Brennkraftmaschine bei einem Startvorgang, vorgesehen ist.

Vorzugsweise umfasst die Parksperrenschaltvorrichtung die von der Brennkraftmaschine getrennt ausgebildete Antriebseinheit, die zur Bereitstellung einer Antriebsleistung zur Erzeugung eines für einen Schaltvorgang der Schalteinheit erforderlichen Schaltdrucks vorgesehen ist, wodurch eine vorteilhafte Abstimmung einer sich aus der Schalteinheit und der Antriebseinheit ergebenden Gesamteinheit erreicht werden kann.

Dabei kann die Antriebseinheit von einer elektrischen Maschine gebildet sein, wodurch dies konstruktiv einfach und kostengünstig integriert werden kann.

Weist die Antriebseinheit neben der Funktion des Aufbaus des Schaltdrucks wenigstens eine weitere Funktion auf, was insbesondere einfach realisierbar ist, wenn die Antriebseinheit von einer elektrischen Einheit gebildet ist, können zusätzliche Bauteile, Bauraum, Gewicht und Kosten eingespart werden. Als zusätzliche Funktionen kommen insbesondere in Frage, eine Antriebsleistung zur Erzeugung eines Kühlmittelvolumenstroms und/oder eine Antriebsleistung zur Erzeugung eines Hydraulikdrucks bei einem Start-Stopp-Betrieb usw. bereitzustellen. Dabei kann die elektrische Antriebseinheit von einem Startergenerator gebildet sein, die als zusätzliche Funktion aufweist, eine Antriebsleistung zum Antrieb einer Brennkraftmaschine bei einem Startvorgang bereitzustellen.

Erfindungsgemäß wird vorgeschlagen, dass die Schalteinheit eine Verriegelungseinheit aufweist, und zwar insbesondere mit wenigstens zwei Verriegelungspositionen, wodurch unerwünschte Schaltungen konstruktiv einfach zumindest weitgehend vermieden werden. Unter "Verriegelungspositionen" sollen in diesem Zusammenhang insbesondere verschiedene Schaltstellungen verstanden werden, in denen eine Verriegelung vorliegt.

Ist die Verriegelungseinheit mittels der Schalteinheit in zumindest eine Schaltrichtung überdrückbar, kann eine Funktion auch bei defekter Verriegelungseinheit zumindest weitgehend sichergestellt werden. Vorzugsweise ist die Verriegelungseinheit dabei mittels der Schalteinheit nur in eine einzelne Schaltrichtung überdrückbar, und zwar besonders vorteilhaft zum Einlegen einer Parkstellung, wodurch das Schalten einer Schaltstellung sowie das Halten dieser Schaltstellung, und zwar vorzugsweise der Parkstellung, mit einer hohen Sicherheit erreicht werden kann.

In einer weiteren Ausgestaltung der Erfindung wird vorgeschlagen, dass die Schalteinheit einen doppelwirkenden hydraulischen Aktuator aufweist, wodurch vorzugsweise in zwei Richtungen ein Schaltvorgang hydraulisch eingeleitet und damit eine hohe Funktionssicherheit erreicht werden kann.

Ferner wird vorgeschlagen, dass die Schalteinheit einen hydraulischen Aktuator umfasst, der in wenigstens eine Schaltrichtung wenigstens zwei getrennte Druckflächen aufweist. Unter "getrennt" soll dabei insbesondere verstanden werden, dass die Druckflächen mit einem Freiraum räumlich getrennt angeordnet sind. Durch eine entsprechende Ausgestaltung kann vorteilhaft eine hohe Schaltkraft erreicht werden.

Weist die Parksperrenschaltvorrichtung eine Steuereinheit auf, die dazu vorgesehen ist, automatisiert wenigstens ein Ventil zu schalten, kann eine erhöhte Schaltsicherheit erreicht werden, und zwar insbesondere, wenn die Steuereinheit dazu vorgesehen ist, das Ventil vor einem Schaltvorgang und insbesondere vor einem Startvorgang einer Brennkraftmaschine zu aktivieren, so dass bei einem anschließenden Schaltvorgang, insbesondere einem Auslegen einer Parkstellung, das Ventil von einem Bediener deaktiviert werden kann.

Weitere Vorteile ergeben sich aus der folgenden Zeichnungsbeschreibung. In der Zeichnung ist ein Ausführungsbeispiel der Erfindung dargestellt. Die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Dabei zeigen:
- Fig. 1: eine schematisiert dargestellte Kraftfahrzeugvorrichtung mit einer Brennkraftmaschine und einer Schaltvorrichtung in einer ersten Schaltstellung und
- Fig. 2: die Kraftfahrzeugvorrichtung aus Figur 1 mit der Schaltvorrichtung in einer zweiten Schaltstellung.

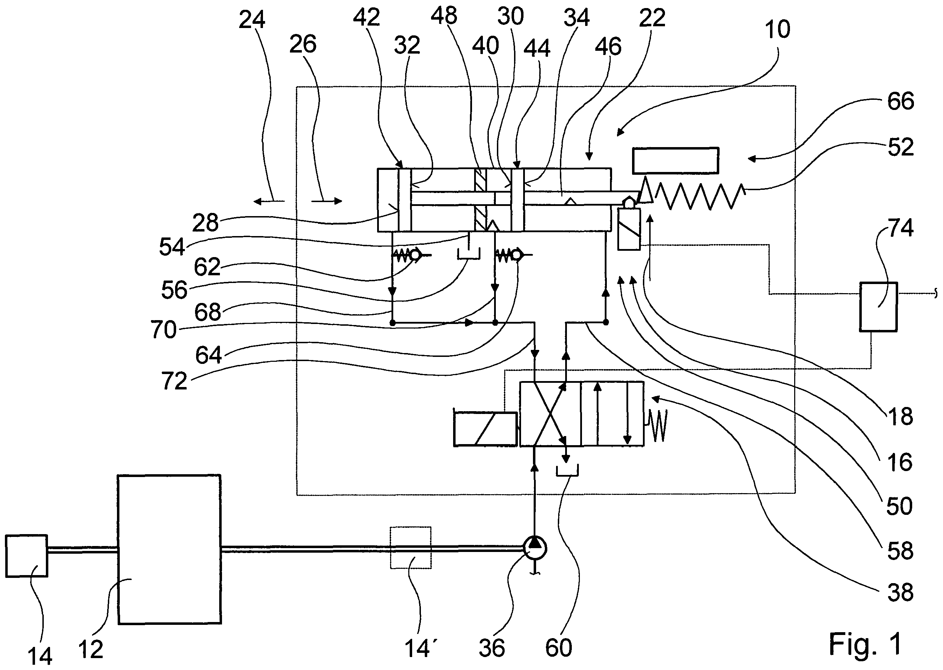

Figur 1 zeigt eine schematisch dargestellte Kraftfahrzeugvorrichtung mit einer Brennkraftmaschine 12 und mit einer erfindungsgemäßen als Shift-by-Wire-System ausgebildeten Schaltvorrichtung, und zwar einer Parksperrschaltvorrichtung, die eine hydraulische Schalteinheit 10 aufweist, die auf eine von der Brennkraftmaschine 12 getrennt ausgebildete Antriebseinheit 14 der Schaltvorrichtung ausgelegt ist. Die Antriebseinheit 14 der Schaltvorrichtung wird von einer elektrischen Maschine, und zwar von einem Startergenerator, gebildet, der dazu vorgesehen ist, die Brennkraftmaschine 12 bei einem Startvorgang derselben durchzudrehen und zudem dazu vorgesehen ist, eine Antriebsleistung zur Erzeugung eines für einen Schaltvorgang der Schalteinheit 10 erforderlichen Schaltdrucks bereitzustellen. Die Antriebseinheit 14 ist dabei über die Brennkraftmaschine 12 antriebstechnisch mit einer Pumpe 36 der Schalteinheit 10 gekoppelt, wodurch vorteilhaft Standardkomponenten verwendet werden können. Grundsätzlich wäre jedoch auch denkbar, dass die Antriebseinheit 14 direkt mit der Brennkraftmaschine 12 und direkt mit der Pumpe 36 gekoppelt ist, wie dies in Figur 1 gestrichelt angedeutet ist. Anstatt der mit der Brennkraftmaschine 12 verbundenen Pumpe 36 ist auch denkbar, dass alternativ oder zusätzlich eine Pumpe vorgesehen ist, die mit der Antriebseinheit 14 gekoppelt und von der Brennkraftmaschine 12 entkoppelt ist und die dazu vorgesehen ist, einen entsprechenden Schaltdruck aufzubauen.

Die Schalteinheit 10 umfasst ein mit der Pumpe 36 gekoppeltes, von einem 4/2-Wege-Magnetventil gebildetes Ventil 38 sowie einen doppelwirkenden hydraulischen Aktuator 22, der in zwei Schaltrichtungen 24, 26 jeweils zwei getrennte Druckflächen 28, 30, 32, 34 aufweist. Der Aktuator 22 weist in einem Aktuatorzylindergehäuse 40 zwei in axialer Richtung beabstandete Kolben 42, 44 auf, die an einer gemeinsamen Kolbenstange 46 befestigt sind und räumlich durch eine feststehende Zylinderzwischenwand 48 getrennt sind.

Ferner umfasst die Schalteinheit 10 eine Verriegelungseinheit 16 mit zwei Verriegelungspositionen 18, 20, die zwei Schaltstellungen entsprechen, und zwar mit einer einer Sperrstellung zugeordneten Verriegelungsposition 18 und einer einer Fahrstellung zugeordneten Verriegelungsposition 20. Die Verriegelungseinheit 16 umfasst einen von einem Elektromagneten gebildeten Hubschieber 50, der in den Verriegelungspositionen 18, 20 in Ausnehmungen der Kolbenstange 46 eingreift und diese fixiert.

Figur 1 zeigt die Schaltvorrichtung in einer Parkstellung. Vor einem Startvorgang der Brennkraftmaschine 12 wird das Ventil 38 von einer Steuereinheit 74 der Schaltvorrichtung automatisiert aktiviert, so dass dasselbe mittels seines Elektromagneten entgegen einer Federkraft seiner Ventilfeder in eine der Parkstellung zugeordneten Endstellung (Figur 1) verschoben wird, wobei der Hubschieber 50 deaktiviert bleibt und damit in seiner Sperrstellung verbleibt. Der Hubschieber 50 ist in der Weise ausgelegt, dass die Parkstellung erst ausgelegt werden kann, wenn derselbe aktiviert wird, so dass auch bei einem falsch geschalteten Ventil 38 sichergestellt werden kann, dass ein unerwünschtes Auslegen der Parkstellung vermieden wird.

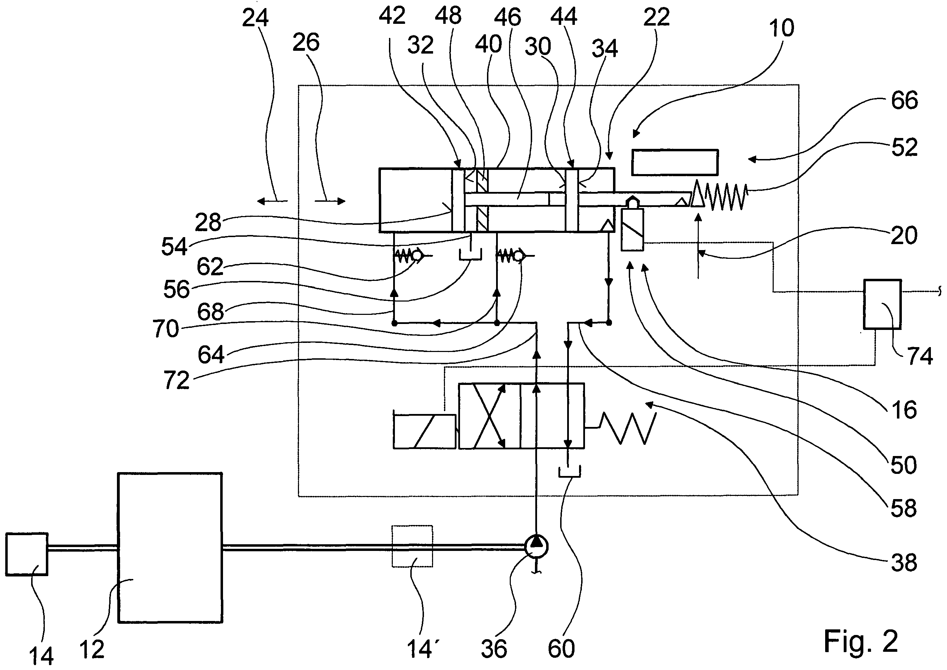

Bei dem Startvorgang der Brennkraftmaschine 12 wird dieselbe mittels der Antriebseinheit 14 ca. mit 200 bis 300 U/min gedreht. Zudem wird mit der Antriebseinheit 14 die Pumpe 36 angetrieben, wobei bereits eine allein von der Antriebseinheit 14 aufgebrachte Antriebsleistung bei einem Startvorgang der Brennkraftmaschine 12 ausreicht, um mittels der Pumpe 36 einen ausreichenden Öldruck aufzubauen, um die Schaltvorrichtung von ihrer Parkstellung in ihre Fahrstellung zu schalten (Figur 2). Es kann damit auch bei einer nicht startfähigen Brennkraftmaschine 12 die Schaltvorrichtung geschaltet werden.

Beim Schaltvorgang bzw. beim Auslegen der Parkstellung werden das Ventil 38 und der Hubschieber 50 von einem Bediener elektrisch angesteuert, und zwar wird der Elektromagnet des Ventils 38 deaktiviert, so dass das Ventil 38 mittels der Federkraft seiner Ventilfeder von seiner der Parkstellung zugeordneten Endstellung (Figur 1) in seine der Fahrstellung zugeordnete Endstellung (Figur 2) verschoben wird und der Hubschieber 50 kurzzeitig aus seiner Sperrstellung in seine Endsperrstellung verschoben wird und die Kolbenstange 46 freigibt. In der der Fahrstellung zugeordneten Endstellung des Ventils 38 wird Hydraulikflüssigkeit in den Druckflächen 28, 30 der Kolben 42, 44 zugewandte Druckräume geleitet, so dass die Kolben 42, 44 gemeinsam mit der Kolbenstange 46 entgegen einer Federkraft einer Aktuatorfeder 52 in Schaltrichtung 26 von ihrer Parkstellung in ihre Fahrstellung verschoben werden. Eine entsprechende Verschiebung wird dabei mittels einer Positionssensoreinheit 66 sensiert. Hydraulikflüssigkeit in einem der Druckfläche 32 zugewandten Druckraum fließt bei einer entsprechenden Verschiebung der Kolben 42, 44, über eine Leitung 54 in einen Tank 56 und Hydraulikflüssigkeit in einem der Druckfläche 34 zugewandten Druckraum fließt über eine Leitung 58 und über das Ventil 38 in einen Tank 60 ab. Um sicherzustellen, dass die den Druckflächen 28, 30 zugewandten Druckräume vorteilhaft mit Hydraulikflüssigkeit gefüllt bleiben, sind dieselben über zwei Rückschlagventile 62, 64 mit einem nicht näher dargestellten Tank verbunden.

Die Kolbenstange 46 ist mit einer nicht näher dargestellten Sperrklinke verbunden, die bei einer Verschiebung der Kolben 42, 44 und der Kolbenstange 46 in ihre Fahrstellung gelöst wird. In der Fahrstellung rastet der Hubschieber 50 in die der Fahrstellung zugeordnete Ausnehmung der Kolbenstange 46 ein und sichert die Schaltvorrichtung in ihrer Fahrstellung. Konkrete Fahrstellungen R, N, D werden über eine nicht näher dargestellte Kolben-Zylindereinheit eingestellt.

Bei einem Einlegen der Parkstellung werden das Ventil 38 und der Hubschieber 50 von einem Bediener elektrisch angesteuert, und zwar wird der Elektromagnet des Ventils 38 aktiviert, so dass das Ventil 38 entgegen der Federkraft seiner Ventilfeder von seiner der Fahrstellung zugeordneten Endstellung (Figur 2) in seine der Parkstellung zugeordnete Endstellung (Figur 1 verschoben wird und der Hubschieber 50 kurzzeitig aus seiner Sperrstellung in seine Endsperrstellung verschoben wird und die Kolbenstange 46 freigibt. In der der Parkstellung zugeordneten Endstellung des Ventils 38 wird Hydraulikflüssigkeit in den der Druckfläche 34 des Kolbens 44 zugewandten Druckraum geleitet, so dass die Kolben 42, 44 gemeinsam mit der Kolbenstange 46 unterstützt durch die Federkraft der Aktuatorfeder 52 in Schaltrichtung 24 von ihrer Fahrstellung in ihre Parkstellung verschoben werden. Liegt kein Hydraulikdruck vor, ist jedoch der Hubschieber 50 geschaltet, werden die Kolben 42, 44 gemeinsam mit der Kolbenstange 46 allein durch die Federkraft der Aktuatorfeder 52 in ihre Parkstellung verschoben.

Die Verriegelungseinheit 16 ist in der Weise ausgelegt, dass diese bei defektem Hubschieber 50 hydraulisch überdrückt werden kann, um die Parkstellung einzulegen. Ein Überdrücken der Verriegelungseinheit 16 allein durch die Federkraft der Aktuatorfeder 52 ist jedoch ausgeschlossen.

Hydraulikflüssigkeit in den den Druckflächen 28, 30 zugewandten Druckräumen fließt bei einer entsprechenden Verschiebung der Kolben 42, 44 über Leitungen 68, 70, 72 und über das Ventil 38 in den Tank 60 ab.

Bei einem Einlegen der Parkstellung wird die mit der Kolbenstange 46 verbundene Sperrklinke in ihre Sperrstellung verschoben. In der Parkstellung rastet der Hubschieber 50 in die der Parkstellung zugeordnete Ausnehmung der Kolbenstange 46 ein und sichert die Schaltvorrichtung in ihrer Parkstellung.

Um stets eine Ansteuerung der Verriegelungseinheit 16 bzw. des Hubschiebers 50 sowie des Ventils 38 zu gewährleisten, ist eine separate Stromquelle in Form einer zusätzlichen Batterie vorgesehen, um eine hohe Sicherheit zu erreichen, dass die Parkstellung eingelegt werden kann.

## Patentansprüche

1. Parksperrschaltvorrichtung eines Kraftfahrzeugs mit wenigstens einer Schalteinheit (10),
**dadurch gekennzeichnet, dass**
die Schalteinheit (10) eine hydraulische Schalteinheit ist, die auf einen Schaltdruck ausgelegt ist, der von einer, von einer Brennkraftmaschine (12) getrennt ausgebildeten, Antriebseinheit (14) erzeugbar ist,
und dass die Schalteinheit (10) eine Verriegelungseinheit (16) aufweist, die Schalteinheit (10) einen doppeltwirkenden hydraulischen Aktuator (22) aufweist,
und dass die Verriegelungseinheit (16) mittels der Schalteinheit (10) überdrückbar ist, wobei die Verriegelungseinheit (16) mittels der Schalteinheit (10) nur in eine einzelne Schaltrichtung (24) überdrückbar ist.

2. Parksperrenschaltvorrichtung nach Anspruch 1,
**dadurch gekennzeichnet, dass**
die Schalteinheit (10) auf eine von einem Startergenerator gebildete Antriebseinheit (14) ausgelegt ist.

3. Parksperrenschaltvorrichtung nach Anspruch 1 oder 2,
**gekennzeichnet durch**
die von der Brennkraftmaschine (12) getrennt ausgebildete Antriebseinheit (14), die zur Bereitstellung einer Antriebsleistung zur Erzeugung eines für einen Schaltvorgang der Schalteinheit (10) erforderlichen Schaltdrucks vorgesehen ist.

4. Parksperrenschaltvorrichtung nach Anspruch 3,
**dadurch gekennzeichnet, dass**
die Antriebseinheit (14) von einer elektrischen Maschine gebildet ist.

5. Parksperrenschaltvorrichtung nach Anspruch 3 oder 4,
**dadurch gekennzeichnet, dass**
die Antriebseinheit (14) neben der Funktion des Aufbaus des Schaltdrucks wenigstens eine weitere Funktion aufweist.

6. Parksperrenschaltvorrichtung nach Anspruch 2 und 5,
**dadurch gekennzeichnet, dass**
die elektrische Antriebseinheit (14) von einem Startergenerator gebildet ist.

7. Parksperrenschaltvorrichtung nach Anspruch 1,
**dadurch gekennzeichnet, dass**
die Verriegelungseinheit (16) wenigstens zwei Verriegelungspositionen (18, 20) aufweist.

8. Parksperrenschaltvorrichtung nach einem der vorhergehenden Ansprüche,
**dadurch gekennzeichnet, dass**
die Schalteinheit (10) einen hydraulischen Aktuator (22) umfasst, der in wenigstens eine Schaltrichtung (24, 26) wenigstens zwei getrennte Druckflächen (28, 30, 32, 34) aufweist.

9. Parksperrenschaltvorrichtung nach einem der vorhergehenden Ansprüche,
**gekennzeichnet durch**
eine Steuereinheit (74), die dazu vorgesehen ist, automatisiert wenigstens ein Ventil (38) zu schalten.

## Claims

1. Parking lock shift device of a motor vehicle having at least one switching unit (10),
**characterised in that**
the switching unit (10) is a hydraulic switching unit which is designed for a switching pressure which can be produced by a drive unit (14) formed separately from an internal combustion engine (12),
and the switching unit (10) has a locking unit (16),
the switching unit (10) has a dual-acting hydraulic actuator (22), and the locking unit (16) can be overcome by means of the switching unit (10), wherein the locking unit (16) can be overcome by means of the switching unit (10) only in one single switching direction (24).

2. Parking lock shift device according to claim 1,
**characterised in that**
the switching unit (10) is configured for a drive unit (14) formed by a starter generator.

3. Parking lock shift device according to claim 1 or 2,
**characterised by**
the drive unit (14) formed separately from the internal combustion engine (12), which is designed to provide a drive power to generate a switching pressure required for a switching process of the switching unit (10).

4. Parking lock shift device according to claim 3,
**characterised in that**
the drive unit (14) is formed by an electric machine.

5. Parking lock shift device according to claim 3 or 4,
**characterised in that**
the drive unit (14) has, besides the function of establishing the switching pressure, at least one further function.

6. Parking lock shift device according to claims 2 and 5,
**characterised in that**
the electrical drive unit (14) is formed by a starter generator.

7. Parking lock shift device according to claim 1,
**characterised in that**
the locking unit (16) has at least two locking positions (18, 20).

8. Parking lock shift device according to one of the preceding claims,
**characterised in that**
the switching unit (10) comprises a hydraulic actuator (22) which has at least two separate pressure surfaces (28, 30, 32, 34) in at least one switching direction (24, 26).

9. Parking lock shift device according to one of the preceding claims,
**characterised by**
a control unit (74) which is provided to switch at least one valve (38) in an automated way.

## Revendications

1. Dispositif de commutation de mécanisme de verrouillage de stationnement d'un véhicule automobile comprenant au moins une unité de commutation (10), **caractérisé en ce que** l'unité de commutation (10) est une unité de commutation hydraulique qui est dimensionnée sur une pression de commutation qui peut être produite par une unité d'entraînement (14) séparée d'un moteur à combustion interne (12), et **en ce que** l'unité de commutation (10) présente une unité de verrouillage (16), l'unité de commutation (10) présente un actionneur (22) hydraulique à double action, et **en ce que** l'unité de verrouillage (16) peut être soumise à une surpression à l'aide de l'unité de commutation (10), l'unité de verrouillage (16) pouvant être soumise à une surpression uniquement dans une seule direction de commutation (24).

2. Dispositif de commutation de mécanisme de verrouillage de stationnement selon la revendication 1, **caractérisé en ce que** l'unité de commutation (10) est disposée sur une unité d'entraînement (14) formée par un générateur de démarreur.

3. Dispositif de commutation de mécanisme de verrouillage de stationnement selon la revendication 1 ou la revendication 2, **caractérisé par** l'unité d'entraînement (14) conçue séparément du moteur à combustion interne (12), ladite unité d'entraînement étant prévue pour fournir une puissance d'entraînement destinée à produire une pression de commutation nécessaire pour un processus de commutation de l'unité de commutation (10).

4. Dispositif de commutation de mécanisme de verrouillage de stationnement selon la revendication 3, **caractérisé en ce que** l'unité d'entraînement (14) est formée à partir d'un moteur électrique.

5. Dispositif de commutation de mécanisme de verrouillage de stationnement selon la revendication 3 ou la revendication 4, **caractérisé en ce que** l'unité d'entraînement (14) en outre de la fonction d'établissement de la pression de commutation présente au moins une autre fonction.

6. Dispositif de commutation de mécanisme de verrouillage de stationnement selon la revendication 2 et la revendication 5, **caractérisé en ce que** l'unité d'entraînement électrique (14) est formée à partir d'un générateur de démarreur.

7. Dispositif de commutation de mécanisme de verrouillage de stationnement selon la revendication 1, **caractérisé en ce que** l'unité de verrouillage (16) présente au moins deux positions de verrouillage (18, 20).

8. Dispositif de commutation de mécanisme de verrouillage de stationnement selon l'une quelconque des revendications précédentes, **caractérisé en ce que** l'unité de commutation (10) comprend un actionneur hydraulique (22) qui présente au moins dans une direction de commutation (24, 26) au moins deux surfaces de pression séparées (28, 30, 32, 34).

9. Dispositif de commutation de mécanisme de verrouillage de stationnement selon l'une quelconque des revendications précédentes, **caractérisé par** une unité de commande (74) qui est prévue pour commuter automatiquement au moins une soupape (38).
